# EUROPEAN PATENT SPECIFICATION

(11) **EP 3 923 308 B1**
(45) Date of publication and mention of the grant of the patent: **16.04.2025**
(21) Application number: 21178685.0
(22) Date of filing: 10.06.2021
(51) Int. Cl.: H01G 11/74, H01G 9/08, H01G 9/10, H01G 11/78, H01G 11/80, H01G 11/82, H01M 50/159, H01M 50/152, H01M 50/164, H01M 50/179, H01M 50/16, H01M 50/184, H01M 50/193

(54) **COVER FOR A WOUND ELECTRODES ENERGY STORAGE DEVICE**
ABDECKUNG FÜR EINE ENERGIESPEICHEREINRICHTUNG MIT GEWICKELTEN ELEKTRODEN
COUVERCLE POUR UN DISPOSITIF DE STOCKAGE D'ÉNERGIE À ÉLECTRODES ENROULÉES

(30) Priority: 11.06.2020 KR 20200070920
(43) Date of publication of application: 15.12.2021
(73) Proprietor: LS Materials Co., Ltd., Anyang-si, Gyeonggi-do 14118 (KR)
(72) Inventor: PARK, Kyeong Hoon, Gyeonggi-do 14119 (KR)
(74) Representative: Botti & Ferrari S.p.A.

(56) References cited:
- CN-U- 204 289 099
- DE-A1- 3 003 762
- DE-A1- 3 116 519
- US-A- 4 433 361
- US-A- 4 514 788

## Description

### BACKGROUND OF THE INVENTION

### Field of the Invention

The present disclosure relates to an energy storage device, and more particularly, to an energy storage device improved in reliability and durability.

### Description of the Related Art

Representative energy storage devices that store electrical energy include batteries and capacitors. Among these capacitors, an ultra-capacitor (UC) is also called a super capacitor, and is a next-generation energy storage device that has intermediate characteristics between an electrolytic capacitor and a secondary battery and is capable of being used together with and replacing a secondary battery due to the high efficiency and semi-permanent life characteristics thereof.

The ultra-capacitor may be classified into an electric double layer capacitor (EDLC) or a pseudo-capacitor according to an energy storage mechanism thereof.

The pseudo-capacitor uses a phenomenon in which charges are accumulated on an electrode surface or inside an electrode near the surface, whereas the electric double layer capacitor uses a property that causes charges to be absorbed to an electric double layer at the interface between the electrode and the electrolyte.

In the electric double layer capacitor, a material having a large surface area such as activated carbon is used as an active material of the electrode to form an electric double layer on the contact surface between the surface of the electrode material and the electrolyte. That is, charge layers having different polarities are generated at the interface between the electrode and the electrolyte due to an electrostatic effect. The charge distribution formed thereby is called an electric double layer, and this phenomenon allows the electric double layer capacitor to have a storage capacity equal to that of a storage battery.

The electric double layer capacitor has a fast charging/discharging characteristic because it uses the principle in which charges are absorbed to/desorbed from the electric double layer generated at the interface between the electrode and the electrolyte. Accordingly, it is possible to use the electric double layer capacitor as an auxiliary power source for a mobile communication device such as a mobile phone, a notebook computer, or a PDA. In addition, the electric double layer capacitor is very suitable as a main or auxiliary power source for an electric vehicle, a night road indication lamp, or an uninterrupted power supply (UPS) that require high capacity.

It is very important for the electrode of such an electric double layer capacitor to have high energy through a large specific surface area, high output power through a low specific resistance, and electrochemical stability through suppression of electrochemical reactions at the interface. Therefore, activated carbon powder or activated carbon fiber having a large specific surface area is currently the most widely used as the main material of an electrode, and a low specific resistance is realized by mixing a conductor with the activated carbon powder or activated carbon fiber or coating the activated carbon powder or activated carbon fiber with metal powder using a spray coating method.

Conventional electric double layer capacitors have been widely used in a cylindrical shape in which an electrode element is wound for miniaturization. Various studies are underway to minimize the internal resistance of energy storage devices in order to improve the electrical characteristics of such winding-type energy storage devices. As an example, studies on the structures and arrangements of lead wires connecting electrode elements and electrode terminals wound in a cylindrical shape in wound energy storage devices are underway.

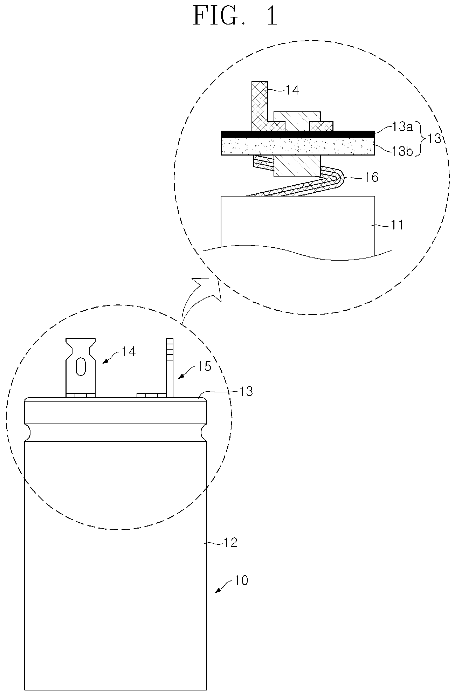

Meanwhile, as illustrated in FIG. 1, a conventional energy storage device 10 includes a cylindrical electrode element 11, a housing 12 that accommodates the electrode element 11 and an electrolyte (not illustrated), a terminal plate 13 that covers the opened top surface of the housing 12, electrode terminals 14 and 15 protruding to the outside of the electrode plate 13, and a plurality of lead wires 16 electrically connecting the electrode element 11 to the electrode terminals 14 and 15.

The terminal plate 13 used in the energy storage device 10 includes an ethylene propylene diene monomer (EPDM) layer 13a configured to perform a sealing function and a bakelite layer 13b configured to perform a support function. The basic structure of the terminal plate 13 is a structure in which the EPDM layer 13a is stacked on the bakelite layer 13b.

However, since the bakelite layer 13b, which is mainly used for a conventional terminal board 13, has a relatively weak durability, the bakelite layer 13b is often broken during the manufacturing or using of the energy storage device 10. In addition, when the bakelite layer 13b is broken and a portion of the EPDM layer 13a is torn or the EPDM layer 13a is not formed to be firmly attached to the inner side of the housing 12, there is a problem in that the electrolyte inside the housing 12 leaks to the outside. In addition, since a rubber material having elasticity is not provided on the side of the terminal plate, high airtightness between the terminal plate and the housing is not achieved. Thus, there is a problem in that the electrolyte evaporates and leaks from a side surface, causing a decrease in capacity and an increase in resistance.

US 4 514 788A discloses a composite cover plate and application of the same, in which the composite cover plate for the locking of compartments of electric components, especially for locking the metallic can compartment of an electric condenser consists of an aluminum disc sandwiched between a rubber coating applied on its one side and a disc of artificial material on its opposite side.

US 4 433 361 A discloses a cover with an electrically insulated current lead-through for closing cup-shaped compartments of electrical components including a lead-through element in the form of a lead-through disc having a lead-through post extending therefrom, a permeation-proof and electrical insulating material disposed over one side of the lead-through disc, and a cover plate disposed over the electrical insulating material such that the latter is sandwiched between the cover plate and the lead-through disc.

DE 31 16 519 A1 discloses a novel laminated material with an insert consisting of a metal foil. Such laminated materials are suitable in particular for sealing electrical equipment, electrolyte capacitors, accumulators, batteries etc.

DE 30 03 762 A1 discloses a casing for a capacitor formed by an aluminium cylinder which is bent over at the top around an end cap. This cap is formed by an inner aluminium disc, an outer aluminium disc and a butyl rubber insulating layer between them.

CN 204 289 099 U discloses a combined energy storage capacitor comprising an insulated cover plate, a shell, and a capacitor core. The capacitor core is sealed and pressed in the shell by the insulated cover plate. The capacitor core is formed by coiling an anode foil, a piece of electrolytic paper and a cathode foil.

### SUMMARY OF THE INVENTION

In an aspect, the present disclosure is to solve the problems described above and other problems. In another aspect, the present disclosure is to provide an energy storage device improved in reliability and durability.

In another aspect, the present disclosure is to provide an energy storage device having a terminal plate including a metal member and a sealing member surrounding the metal member.

In still another aspect, the present disclosure is to provide an energy storage device capable of improving rigidity of the terminal plate using a metal member having a structural shape.

In yet another aspect, the present disclosure is to provide an energy storage device capable of reinforcing sealing and insulation of the terminal plate using a sealing member having a structural shape.

In view of the foregoing, the present disclosure provides an energy storage device as defined in claim 1 including: an electrode element including an anode plate, a separator, and a cathode plate; a housing configured to accommodate the electrode element; a terminal plate configured to cover an opened top surface of the housing; and electrode terminals protruding to an outside of the terminal plate and including an anode terminal, a cathode terminal, and two terminal pins. The terminal plate consists of a metal member and a sealing member that surrounds a top surface and a bottom surface of the metal member, and an outermost side surface between the top surface and the bottom surface, and the sealing member includes an outer upper horizontal portion, an outer lower horizontal portion, and an outer vertical portion disposed between the housing and the metal member. The metal member has a plurality of through holes formed in a region thereof so as to accommodate the sealing member, the plurality of through holes being filled with the sealing member.

More preferably, the metal member has a diameter d1 different from the diameter d2 of a beaded portion formed on an upper portion of the housing.

More preferably, the sealing member is made of an electrically insulative rubber material. In addition, the sealing member has a first diameter L1 and a second diameter L2, and the second diameter L2 is different from the first diameter L1. In addition, the sealing member has a first diameter L1 and a second diameter L2, and the second diameter L2 is equal to the first diameter L1. In addition, the sealing member includes an inner upper horizontal portion, an inner lower horizontal portion, and an inner vertical portion disposed between the terminal pins of the electrode terminals and the metal member.

More preferably, the metal member includes a first rigid structure formed by bending upward or downward in an edge region of the metal member. In addition, the metal member further includes a second rigid structure disposed along edges of first and second terminal pin holes into which the anode and cathode terminals are inserted, respectively.

More preferably, the metal member further includes a second rigid structure including a first protrusion formed on the top surface of the metal member and a first recess formed in the bottom surface of the metal member at a position corresponding to a position of the first protrusion.

The sealing member surrounds two terminal pin holes of the metal member.

According to at least one of the embodiments of the present disclosure, by providing the terminal plate including the metal member having a structural shape and the sealing member surrounding the metal member, it is possible to improve an electrolyte sealing effect compared to the conventional energy storage device.

In addition, according to at least one of the embodiments of the present disclosure, by providing the terminal plate including the metal member having a structural shape and the sealing member surrounding the metal member, it is possible to increase the rigidity of the terminal plate, and thus it is possible to improve the reliability and durability of the energy storage device.

However, the effects which can be obtained by the present disclosure are not limited to those described above, and a person ordinarily skilled in the art, to which the present disclosure belongs, could understand other effects, which are not described above, from the appended claims.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a view illustrating the configuration of an energy storage device according to the prior art;
FIG. 2 is a perspective view illustrating the external appearance of an energy storage device according to an embodiment of the present disclosure;
FIG. 3 is a view illustrating the configuration of an electrode element included in the energy storage device of FIG. 2;
FIG. 4 is a view illustrating the configuration of a terminal plate included in the energy storage device of FIG. 2;
FIGS. 5A and 5B are views illustrating the shape of a terminal plate according to an embodiment of the present disclosure;
FIGS. 6A and 6B are views illustrating the shape of a terminal plate according to another embodiment of the present disclosure;
FIG. 7 is a view illustrating the shape of a metal member according to an embodiment of the present disclosure;
FIG. 8A is a view illustrating the shape of a metal member according to another embodiment of the present disclosure;
FIG. 8B is a view illustrating a cross section of a terminal plate including the metal member of FIG. 8A taken along line A-A';
FIGS. 9A and 9B are views illustrating the shape of a metal member according to still another embodiment of the present disclosure;
FIGS. 10A and 10B are views illustrating the shape of a metal member according to still another embodiment of the present disclosure;
FIGS. 11A and 11B are views illustrating the shape of a metal member according to still another embodiment of the present disclosure; and
FIGS. 12A and 12B are views illustrating the shape of a metal member according to yet another embodiment of the present disclosure.

### DESCRIPTION OF THE PREFERRED EMBODIMENTS

Hereinafter, embodiments disclosed herein will be described in detail with reference to the accompanying drawings, and regardless of reference numerals, the same or similar elements will be assigned the same reference numerals, and redundant descriptions thereof will be omitted. Hereinafter, in describing the embodiments disclosed herein, when it is determined that a detailed description of related known technologies may obscure the subject matter of the embodiments disclosed herein, the detailed description thereof will be omitted. In addition, the accompanying drawings are provided for easy understanding of the embodiments disclosed herein.

The present disclosure proposes an energy storage device improved in reliability and durability. In addition, the present disclosure proposes an energy storage device having a terminal plate including a metal member and a sealing member surrounding the metal member. In addition, the present disclosure proposes an energy storage device capable of increasing the rigidity of a terminal plate using a metal member having a structural shape. In addition, the present disclosure proposes an energy storage device capable of reinforcing sealing and insulation of a terminal plate using a sealing member having a structural shape.

Hereinafter, various embodiments of the present disclosure will be described in detail with reference to the drawings.

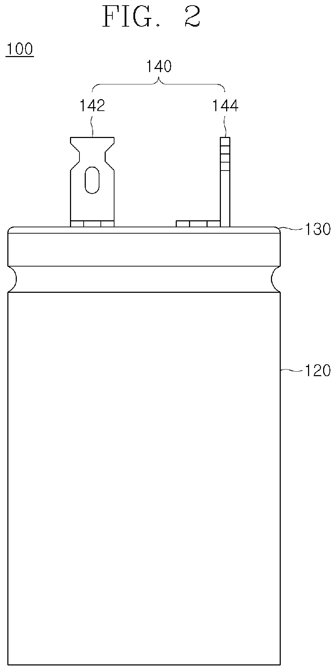

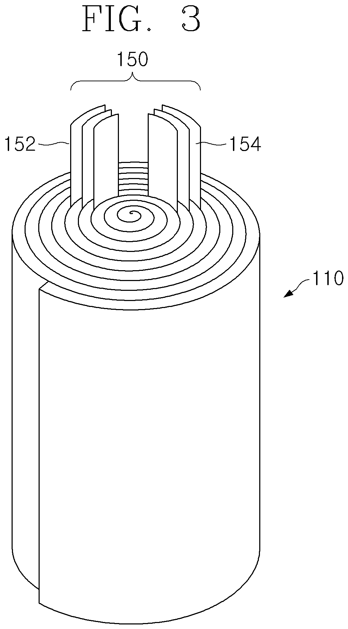

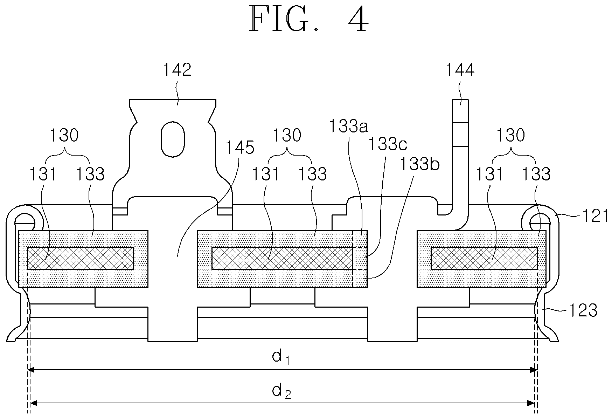

FIG. 2 is a perspective view illustrating the external appearance of an energy storage device according to an embodiment of the present disclosure, FIG. 3 is a view illustrating the configuration of an electrode element included in the energy storage device of FIG. 2, and FIG. 4 is a view illustrating the configuration of a terminal plate included in the energy storage device of FIG. 2.

Referring to FIGS. 2 to 4, an energy storage device 100 according to an embodiment of the present disclosure includes a cylindrical electrode element 110, a housing 120 that accommodates the electrode element 110, an electrolyte (not illustrated) accommodated in the housing 120, wherein the electrode element 110 is immersed into the electrolyte, terminal plates 130 that cover the opened top surface of the housing 120, electrode terminals 140 protruding to the outside of the electrode plates 130, and a plurality of lead wires 150 electrically connecting the electrode element 110 to the electrode terminals 140.

The electrode element 110 includes at least one anode plate, at least one separator, and at least one cathode plate. The electrode element 110 is formed by sequentially stacking the anode plate, the separator, and the cathode plate, and then winding them in a cylindrical shape.

The anode plate includes an active material layer including a metallic current collector and porous activated carbon, and one or more anode lead wires 152 are connected to one side thereof. The cathode plate includes an active material layer including a metallic current collector and porous activated carbon, and one or more cathode lead wires 154 are connected to one side thereof. It is preferable to remove the active material layer from the portions of the current collectors to which the anode and cathode lead wires 152 and 154 are connected.

Each of the current collectors constituting the anode plate and the cathode plate is typically formed in the form of a metal foil, and serves as a passage for electric charges discharged from the active material layers or supplied to the active material layers. The active material layers constituting the anode plate and the cathode plate are composed of activated carbon and are widely coated on opposite surfaces of the current collector. The active material layers serve to store the electrical energy of the anode and the cathode.

A separator for limiting conduction of electric charges is disposed between the anode plate and the cathode plate, and the inside of the housing 120 is filled with an electrolyte, into which the electrode element 110 is immersed. When a predetermined voltage is applied to the anode plate and the cathode plate in the state in which the housing 120 is filled with the electrolyte, the positive and negative ions contained in the electrolyte move to the anode plate and the cathode plate, respectively, and penetrate into the pores of the porous active material layers.

The housing (or body case) 120 serves to accommodate the electrode element 110 and the electrolyte. In this case, the side and bottom surfaces of the housing 120 may be configured to be sealed to the outside, and the top surface may be configured to be opened to the outside.

The housing 120 may be formed in a shape corresponding to the overall shape of the electrode element 110. In addition, the housing 120 may be formed of a metal material or a synthetic resin material. For example, the housing 120 may be made of an aluminum (Al) material or an aluminum alloy material.

On the upper end of the housing 120, a curled portion 121 having a shape bent from the upper end to the inside may be formed in order to fix the terminal plate 130 to the upper portion of the housing 120. For example, the curled portion 121 may be formed by bending the end portion of the housing 120 to have a curved shape. In addition, the curled portion 121 may be formed to be in close contact with the top surface of the terminal plate 130. The curled portion 121 not only maintains the internal pressure of the housing 120, but also seals the electrolyte so that the electrolyte in the housing 120 does not leak to the outside.

A beaded portion 123 in a shape recessed inward from the side surface of the housing 120 may be formed on the upper portion of the housing 120 in order to fix the terminal plate 130 to the upper portion of the housing 120. The beaded portion 123 may be formed through a beading process on the housing 120. The beaded portion 123 may be formed along a circumferential direction from a side surface of the housing 120.

The terminal plate 130 is disposed above the housing 120, and serves to seal (or cover) the opened top surface of the housing 120. In this case, the terminal plate 130 may be disposed between the curled portion 121 and the beaded portion 123 located in the upper portion of the housing 120, and may be firmly fixed to the upper portion of the housing 120 via the curled portion 121 and the beaded portion 123.

The terminal plate 130 may include a metal member (or a metal plate 131) and a sealing member 133 surrounding the metal member 131. In this case, the terminal plate 130 may be formed to have a uniform thickness as a whole.

The metal member 131 may be formed in a plate shape corresponding to the shape of the terminal plate 130. For example, the metal member 131 may be formed in a circular plate shape. In addition, the metal member 131 may be formed of an aluminum (Al) material or an aluminum alloy material, but is not limited thereto.

The metal member 131 serves to support the electrode terminals 140. In addition, the metal member 131 serves as a body frame of the terminal plate 130. In this case, it is necessary to design the metal member 131 to withstand a high pressure generated inside the housing 120. To this end, the metal member 131 may be formed to have a structural shape for increasing the rigidity of the terminal plate 130.

The diameter d1 of the metal member 131 may be larger than the diameter d2 of the beaded portion 123. This is to fix the metal member 131 such that the metal member 131 does not descend toward the lower portion of the housing 120 by forming the metal member 131 to be engaged with the beaded portion 123.

The metal member 131 may extend in a horizontal direction such that at least a portion of the metal member 131 is located under the curled portion 121. This is to improve the sealing function of the terminal plate 130 such that the electrolyte inside the housing 120 does not leak to the outside by disposing the sealing member 133 between the metal member 131 and the curled portion 121.

The sealing member 133 may be formed in a plate shape corresponding to the shape of the metal member 131. For example, the sealing member 133 may be formed in a circular plate shape. In addition, an empty space for accommodating the metal member 131 may be formed inside the sealing member 133.

The sealing member 133 serves to seal the electrolyte inside the housing 120 so that the electrolyte does not leak to the outside. In particular, by disposing the sealing member 133 on the outermost side of the terminal plate 130, it is possible to tightly seal the electrolyte having strong volatility so as to prevent evaporation or leakage through the gap between the side surface of the terminal plate and the housing 120, which have a somewhat weak bonding force. In addition, the sealing member 133 serves to insulate the metal member 131 so as to prevent the occurrence of a short between the anode terminal 142 and the cathode terminal 144.

The sealing member 133 may be formed to surround the entire metal member 131 such that the metal member 131 is not exposed to the outside. For example, as illustrated in FIG. 4, the sealing member 133 may be formed to surround the top surface, the bottom surface, and the side surface of the metal member 131, and terminal pin holes. Accordingly, the sealing member 133 may be disposed between the inner surface of the housing 120 and the metal member 131.

In addition, the sealing member 133 may also be disposed between the terminal pins of the electrode terminals 140 and the metal member 131. More specifically, the sealing member 133 may include an inner upper horizontal portion 133a disposed between the terminal pins of the electrode terminals 140 and the metal member 131, an inner lower horizontal portion 133b, and an inner vertical portion 133c. The inner upper horizontal portion 133a, the inner lower horizontal portion 133b, and the inner vertical portion 133c may improve a sealing and bonding force between the electrode terminals 140 and the terminal plate 130. Through the arrangement structure of the sealing member 133, it is possible to effectively prevent the electrolyte inside the housing 120 from being exposed to the outside. Since the electrolyte is particularly highly volatile, the gap between the terminal pin 145 and the metal member 131, in which the bonding force may be weakened due to bonding between the dissimilar members, is firmly sealed so as to prevent evaporation or leakage of the electrolyte. In addition, since the electrode terminals 140 are exposed to a high temperature between the electrode terminals 140 and the terminal plate 130, there is a high risk that the members having different thermal expansion coefficients are separated from each other due to the difference in thermal expansion of the members, and thus the airtightness decreases. Thus, it is necessary to ensure high airtightness.

Meanwhile, although not illustrated in the drawings, in another embodiment, the sealing member 133 may be formed to surround at least a portion of the metal member 131 such that at least a portion of the metal member 131 is exposed to the outside. That is, in order to keep the thickness of the terminal plate 130 constant, the metal member 131 may be formed to be exposed to the outside through at least some regions of the top and bottom surfaces of the sealing member 133.

The sealing member 133 may be formed of an electrically insulative rubber material. For example, the sealing member 133 may be formed of an ethylene propylene diene monomer (EPDM) material.

Electrode terminals 140 including an anode terminal 142 to which one or more anode lead wires 152 are connected and a cathode terminal 144 to which one or more cathode lead wires 154 are connected are coupled to the terminal plate 130. To this end, two terminal pin holes (not illustrated) may be formed in the terminal plate 130.

The electrode terminals 140 may be made of at least one of aluminum (Al), steel, or stainless steel in order to ensure mechanical strength. Furthermore, by coating the surfaces of the electrode terminals 140 with nickel (Ni), tin (Sn), or the like, it is possible to ensure the bonding property through soldering or the like.

The electrode terminals 140 allow the anode terminal 142 and the cathode terminal 144 to be disposed in directions perpendicular to each other outside the terminal plate 130. This is to allow the same bearing force to be generated regardless the direction in which a bending moment caused by an external force acts.

The plurality of lead wires 150 may be connected to the anode plate and the cathode plate of the electrode element 110 through a laser welding process and/or a rivet press-fitting process. The anode lead wires 152 may be disposed on the anode plate at regular intervals, and the cathode lead wires 154 may be disposed on the cathode plate at regular intervals. This is because, when the plurality of lead wires 150 are irregularly connected to the electrode plate, an electric current applied to the electrode plate does not spread evenly to the electrode, and thus the resistance value is increased, which may adversely affect the reliability of the energy storage device.

In addition, the plurality of lead wires 150 may be electrically connected to the electrode terminals 140 through a laser welding process and/or a rivet press-fitting process. That is, the anode lead wires 152 may be electrically connected to the anode terminal 142 coupled to the terminal plate 130, and the cathode lead wires 154 may be electrically connected to the cathode terminal 144 coupled to the terminal plate 130.

As described above, the energy storage device according to the present disclosure includes a terminal plate including a metal member and a sealing member surrounding the metal member, thereby improving not only the sealing effect of the electrolyte, but also the reliability and durability of the energy storage device.

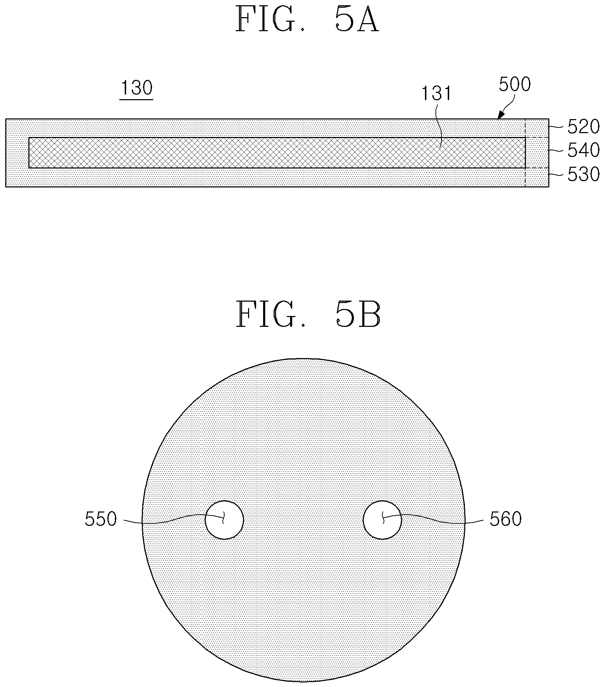

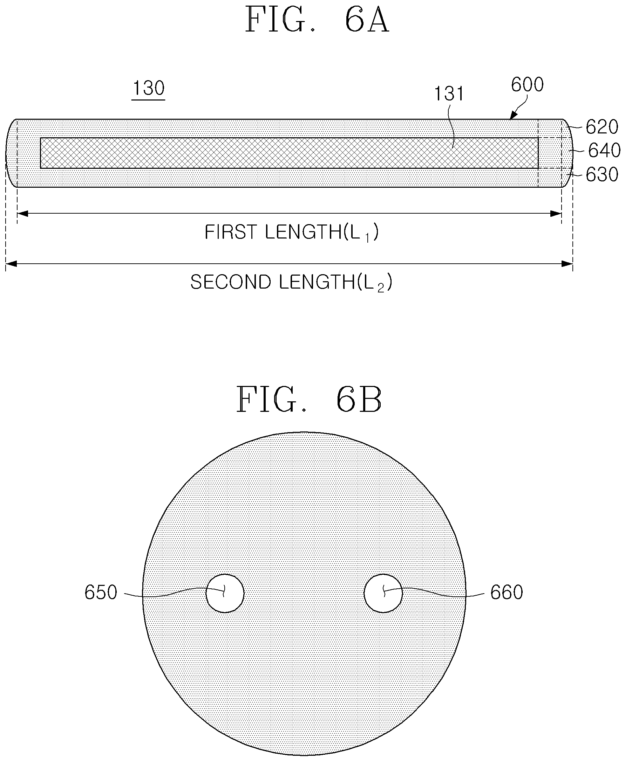

FIGS. 5A and 5B and FIGS. 6A and 6B are views illustrating shapes of terminal plates according to various embodiment of the present disclosure. That is, FIGS. 5A and 6A are views illustrating shapes obtained when cross sections of terminal plates are viewed from a side, and FIGS. 5B and 6B are views illustrating shapes obtained when the terminal plates are viewed from above.

Referring to FIGS. 5A to 6B, the terminal plate 130 according to an embodiment of the present disclosure includes a first sealing member 500 and a metal member 131, and a terminal plate 130 according to another embodiment of the present disclosure includes a second sealing member 600 having a shape different from the first sealing member 500 and the metal member 131.

Each of the first and second sealing members 500 and 600 may be formed to surround the metal member 131. To this end, an empty space may be formed inside each of the first and second sealing members 500 and 600 to accommodate the metal member 131. Each of these first and second sealing members 500 and 600 is integrally coupled with the metal member 131 to form the terminal plate 130.

The first and second sealing members 500 and 600 may be formed in a shape corresponding to the shape of an opening formed at an upper end of the housing 120. For example, the first and second sealing members 500 and 600 may be formed in a circular plate shape.

The side surfaces (i.e., circumferential surfaces) of the first and second sealing members 500 and 600 may be formed in a planar shape or a curved shape. As an example, as illustrated in FIG. 5A, the side surface of the first sealing member 500 may be formed in a planar shape extending in a vertical direction. The first sealing member 500 may include an edge region, that is, an outer upper horizontal portion 520, an outer lower horizontal portion 530, and an outer vertical portion 540 disposed between the metal member 131 and the housing 120. The outer upper horizontal portion 520, the outer lower horizontal portion 530, and the outer vertical portion 540 may improve the sealing and bonding force between the housing 120 and the terminal plate 130.

Meanwhile, as an example, as illustrated in FIG. 6A, the side surface of the second sealing member 600 may be formed in a curved shape protruding in a horizontal direction. The second sealing member 600 may have a first length (or diameter L1) and a second length (or diameter L2). Here, the second length L2 may be larger than the first length L1. In addition, the second length L2 may be the maximum diameter of the second sealing member 600, and the first length L1 may be the minimum diameter of the second sealing member 600.

The second sealing member 600 may include an edge region, that is, an outer upper horizontal portion 620, an outer lower horizontal portion 630, and an outer vertical portion 640 disposed between the metal member 131 and the housing 120. The outer upper horizontal portion 620, the outer lower horizontal portion 630, and the outer vertical portion 640 may improve the sealing and bonding force between the housing 120 and the terminal plate 130. In addition, when the side surface of the second sealing member 600 is formed in a curved shape, it is possible not only to guide the terminal plate 130 such that the terminal plate can be easily assembled on the upper end of the housing 120, but also to improve the sealing performance.

Each of the sealing members 500 and 600 may be formed to have a uniform thickness as a whole. In addition, the thickness of the sealing member 500 or 600 disposed on the upper portion of the metal member 131 may be formed equal or similar to the thickness of the sealing member 500 or 600 disposed under the corresponding metal member 131.

Two terminal pin holes 550 and 560 or 650 and 660 may be formed in each of the sealing members 500 and 600. The anode terminal 142 and the cathode terminal 144 may be coupled to the sealing member 500 or 600 through the two terminal pin holes 550 and 560 or 650 and 660.

These first and second sealing members 500 and 600 perform a role of sealing the electrolyte inside the housing 120 such that the electrolyte does not leak to the outside. In addition, each of the first and second sealing members 500 and 600 serves to insulate the metal member 131 such that a short is not generated between the anode terminal 142 and the cathode terminal 144.

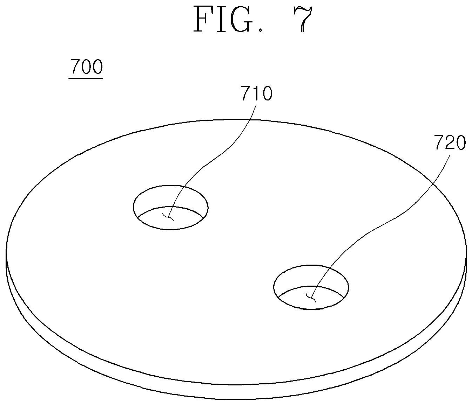

FIG. 7 is a view illustrating the shape of a metal member according to an embodiment of the present disclosure.

Referring to FIG. 7, a metal member 700 according to an embodiment of the present disclosure may be disposed inside a terminal plate 130, and may be formed in a plate shape corresponding to the shape of the terminal plate 130. For example, the metal member 700 may be formed in a circular plate shape.

The metal member 700 may be formed to have a structural shape as a body frame of the terminal plate 130. For example, the metal member 700 may be formed in a circular plate shape having flat top and bottom surfaces.

The metal member 700 is disposed inside the sealing member 133, and serves to maintain the rigidity of the terminal plate 130. The sealing member 700 may be formed to have a uniform thickness as a whole.

Two terminal pin holes 710 and 720 may be formed in an area of the metal member 700. An anode terminal 142 and a cathode terminal 144 may be coupled to the metal member 700 through the two terminal pin holes 710 and 720.

The metal member 700 having such a structural shape serves to support the electrode terminals 140. In addition, the metal member 700 serves to withstand the high pressure generated inside the housing.

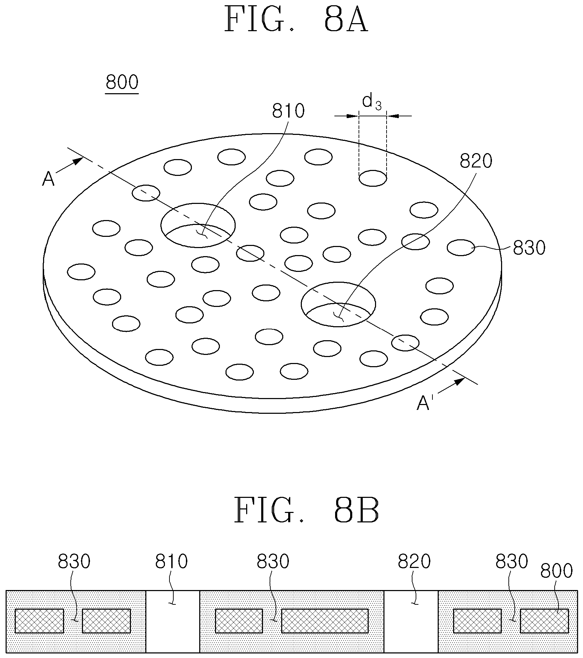

FIG. 8A is a view illustrating the shape of a metal member according to another embodiment of the present disclosure, and FIG. 8B is a view illustrating a cross section of a terminal plate including the metal member of FIG. 8A taken along line A-A'. Since the metal member 800 according to the present embodiment is similar to the metal member 700 of FIG. 7 described above, the difference will be mainly described.

Referring to FIGS. 8A and 8B, the metal member 800 according to an embodiment of the present disclosure may be disposed inside a terminal plate 130, and may be formed in a plate shape corresponding to the shape of the terminal plate 130.

The metal member 800 may be formed to have a structural shape as a body frame of the terminal plate. For example, the metal member 800 may be formed in a circular plate shape having flat top and bottom surfaces.

The metal member 800 is disposed inside the sealing member 133, and serves to maintain the rigidity of the terminal plate 130. The sealing member 800 may be formed to have a uniform thickness as a whole.

Two terminal pin holes 810 and 820 may be formed in an area of the metal member 800. An anode terminal 142 and a cathode terminal 144 may be coupled to the metal member 800 through the two terminal pin holes 810 and 820.

In addition, a plurality of through holes 830 may be formed in an area of the metal member 800 to accommodate a sealing member 133. The through holes 830 may have the same or similar shapes, respectively. For example, the through holes 830 may be formed in a circular shape, but are not necessarily limited thereto.

The plurality of through holes 830 may be arranged to be evenly distributed over the entire area of the metal member 800. Meanwhile, in the present embodiment, the plurality of through holes 830 are illustrated as being randomly arranged, but are not necessarily limited thereto. It will be apparent to those skilled in the art that the plurality through holes 830 may be arranged in a predetermined pattern.

The diameter d3 of each through hole 830 may be formed to have a size of at least 1 mm. In addition, the diameter d3 of each through hole 830 may be smaller than the diameters of the terminal pin holes 810 and 820.

During a process of manufacturing the terminal plate 130, the sealing member 133 is formed to surround the metal member 131. In that process, the material of the sealing member 133 may be introduced into the plurality of through holes 830 in the metal member 800. Accordingly, a first sealing member (not illustrated) formed on the top of the metal member 800 and a second sealing member (not below) formed on the bottom of the metal member 800 may be connected to each other via a third sealing member (not illustrated) introduced into the plurality of through holes 830. Through this connection structure, the sealing member 133 may be closely coupled (attached) to the opposite surfaces of the metal member 800.

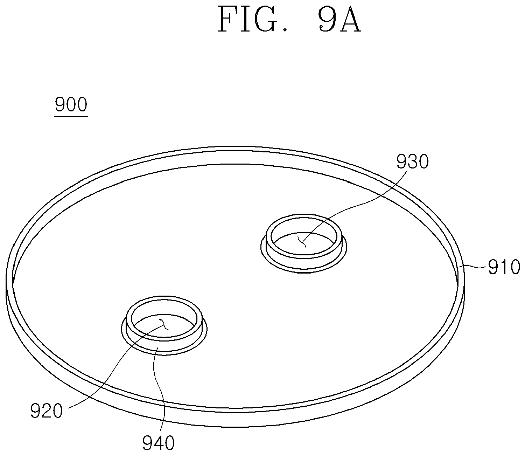

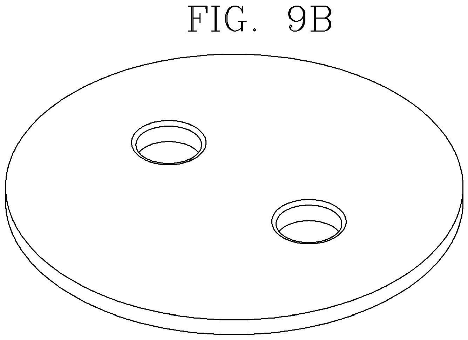

FIGS. 9A are 9B are views illustrating the shape of a metal member according to still another embodiment of the present disclosure. That is, FIG. 9 is a view illustrating the shape of the top surface of the metal member, and FIG. 9B is a view illustrating the shape of the bottom surface of the metal member. Since the metal member 900 according to the present embodiment is similar to the metal member 700 of FIG. 7 described above, the difference will be mainly described.

Referring to FIGS. 9A and 9B, a metal member 900 according to a still another embodiment of the present disclosure may be disposed inside a terminal plate 130, and may be formed in a plate shape corresponding to the shape of the terminal plate 130. The metal member 900 may be formed to have a structural shape for increasing the rigidity of the terminal plate 130.

A first rigid structure 910 may be formed in an edge region of the metal member 900. The first rigid structure 910 is formed along an edge region of the metal member 900, and may be bent upward or downward from one surface of the metal member 900. For example, the first rigid structure 910 may be formed by bending an end portion of the metal member 900 in a vertical direction, but is not limited thereto.

Two terminal pin holes 920 and 930 may be formed in an area of the metal member 900. An anode terminal 142 and a cathode terminal 144 may be coupled to the metal member 900 through the two terminal pin holes 920 and 930.

Second rigid structures 940 may be formed around the terminal pin holes 920 and 930, respectively. The second rigid structures 940 are formed along the edge regions of the terminal pin holes 920 and 930, respectively, and may be bent upward from the top surface of the metal member 900. For example, the second rigid structures 940 may be formed by bending the metal member 930 in the vicinities of the terminal pin holes 920 and 930 in the vertical direction, but are not limited thereto.

In addition, although not illustrated in the drawings, a plurality of through holes (not illustrated) may be formed in an area of the metal member 900 to accommodate the sealing member 133. This is to increase the bonding force (adhesion force) between the metal member 900 having a structural shape and the sealing member 133.

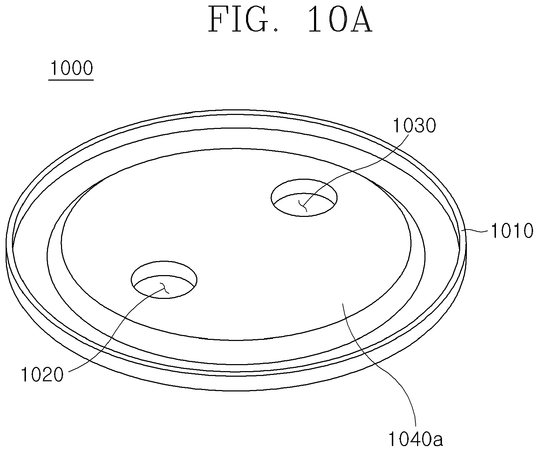

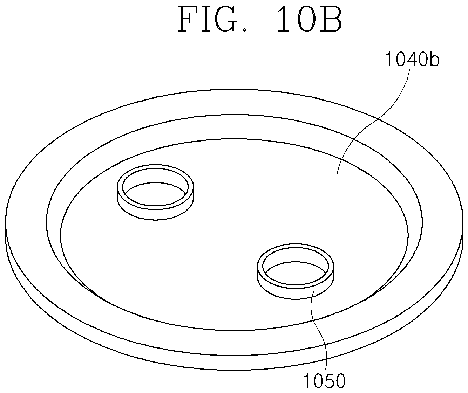

FIGS. 10A and 10B are views illustrating the shape of a metal member according to still another embodiment of the present disclosure. That is, FIG. 10A is a view illustrating the shape of the top surface of the metal member, and FIG. 10B is a view illustrating the shape of the bottom surface of the metal member. Since the metal member 1000 according to the present embodiment is similar to the metal member 900 of FIG. 9 described above, the difference will be mainly described.

Referring to FIG. 10A and 10B, a metal member 1000 according to a still another embodiment of the present disclosure may be disposed inside a terminal plate 130, and may be formed in a plate shape corresponding to the shape of the terminal plate 130. The metal member 1000 may be formed to have a structural shape for increasing the rigidity of the terminal plate 130.

A first rigid structure 1010 may be formed in an edge region of the metal member 1000. As an embodiment, the first rigid structure 1010 may be formed along an edge region of the metal member 1000, and may be bent upward or downward from the top surface of the metal member 1000.

Two terminal pin holes 1020 and 1030 may be formed in an area of the metal member 1000. An anode terminal 142 and a cathode terminal 144 may be coupled to the metal member 1000 through the two terminal pin holes 1020 and 1030.

Second rigid structures 1050 may be formed around the terminal pin holes 1020 and 1030, respectively. The second rigid structures 1050 are formed along the edge regions of the terminal pin holes 1020 and 1030, respectively, and may be bent in a direction opposite to the direction in which the first rigid structure 1010 is bent.

In addition, a third rigid structure 1040 may be formed in an inner region of the metal member 1000. The third rigid structure 1040 may include a protrusion 1040a protruding upward from the top surface of the metal member 1000, and a recess 1040b recessed upward from the bottom surface of the metal member 1000 at a position corresponding to that of the protrusion 1040a. For example, the third rigid structure 1040 may be formed in a circular plate shape, but is not necessarily limited thereto. In addition, the side surface of the third rigid structure 1040 may be inclined in a diagonal shape.

In addition, although not illustrated in the drawings, a plurality of through holes (not illustrated) may be formed in an area of the metal member 1000 to accommodate the sealing member 133. This is to increase the bonding force (adhesion force) between the metal member 1000 having a structural shape and the sealing member 133.

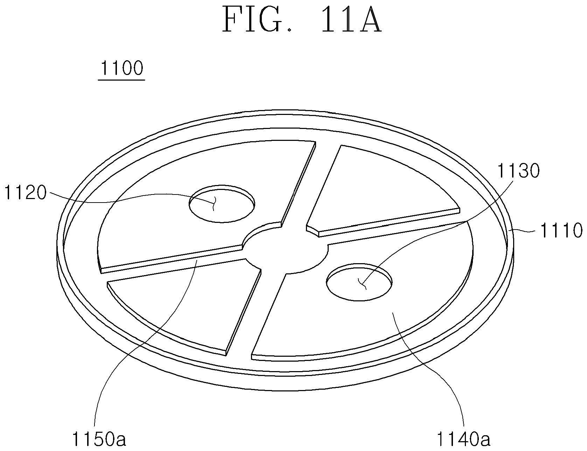

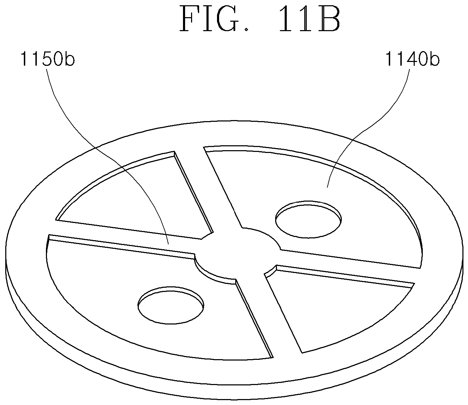

FIGS. 11A and 11B are views illustrating the shape of a metal member according to still another embodiment of the present disclosure. That is, FIG. 11A is a view illustrating the shape of the top surface of a metal member, and FIG. 11B is a view illustrating the shape of the bottom surface of the metal member. Since the metal member 1100 according to the present embodiment is similar to the metal member 900 of FIG. 9 described above, the difference will be mainly described.

Referring to FIG. 11A and 11B, the metal member 1100 according to a still another embodiment of the present disclosure may be disposed inside a terminal plate 130, and may be formed in a plate shape corresponding to the shape of the terminal plate 130. The metal member 1100 may be formed to have a structural shape for increasing the rigidity of the terminal plate 130.

A first rigid structure 1110 may be formed in an edge region of the metal member 1100. As an embodiment, the first rigid structure 1110 may be formed along an edge region of the metal member 1100, and may be bent vertically upward from the top surface of the metal member 1100.

Two terminal pin holes 1120 and 1130 may be formed in an area of the metal member 1100. An anode terminal 142 and a cathode terminal 144 may be coupled to the metal member 1100 through the two terminal pin holes 1120 and 1130.

In addition, second rigid structure 1140 may be formed in an inner region of the metal member 1100. The second rigid structure 1140 may include a first protrusion 1140a protruding upward from the top surface of the metal member 1100, and a first recess 1140b recessed upward from the bottom surface of the metal member 1100 at a position corresponding to that of the first protrusion 1140a. For example, the second rigid structure 1140 may be formed in a circular plate shape, but is not necessarily limited thereto. In addition, the side surface of the second rigid structure 1140 may be inclined in a diagonal shape.

In addition, at least one third rigid structure 1150 may be formed in an inner region of the metal member 1100. The third rigid structure 1150 may include a second recess 1150a recessed downward from the top surface of the second rigid structure 1140, and a second protrusion 1150b protruding downward from the bottom surface of the second rigid structure 1140 at a position corresponding to that of the second recess 1150a. For example, the third rigid structure 1150 may be formed in a straight-line shape, but is not necessarily limited thereto. The third rigid structure 1150 may be formed across the second rigid structure 1140.

Meanwhile, when the number of the third rigid structures 1150 formed on the metal member 1100 is plural, the plurality of third rigid structures 1150 may have the same or similar shapes, respectively. In addition, the third rigid structures 1150 may be formed to cross each other in the central region of the metal member 1100.

In addition, although not illustrated in the drawings, a plurality of through holes (not illustrated) may be formed in an area of the metal member 1100 to accommodate the sealing member 133. This is to increase the bonding force (adhesion force) between the metal member 1100 having a structural shape and the sealing member 133.

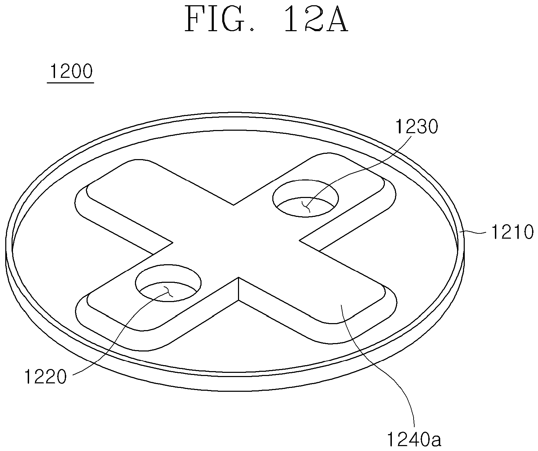

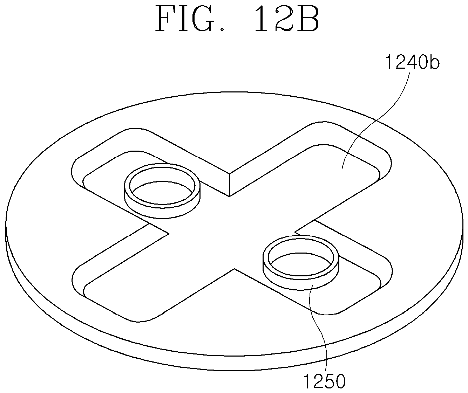

FIGS. 12A are 12B are views illustrating the shape of a metal member according to yet another embodiment of the present disclosure. That is, FIG. 12A is a view illustrating the shape of the top surface of a metal member, and FIG. 12B is a view illustrating the shape of the bottom surface of the metal member. Since the metal member 1200 according to the present embodiment is similar to the metal member 900 of FIG. 9 described above, the difference will be mainly described.

Referring to FIGS. 12A and 12B, a metal member 1200 according to a still another embodiment of the present disclosure may be disposed inside a terminal plate 130, and may be formed in a plate shape corresponding to the shape of the terminal plate 130. The metal member 1200 may be formed to have a structural shape for increasing the rigidity of the terminal plate 130.

A first rigid structure 1210 may be formed in an edge region of the metal member 1200. As an embodiment, the first rigid structure 1210 may be formed along an edge region of the metal member 1200, and may be bent vertically upward from the top surface of the metal member 1200.

Two terminal pin holes 1220 and 1230 may be formed in an area of the metal member 1200. An anode terminal 142 and a cathode terminal 144 may be coupled to the metal member 1200 through the two terminal pin holes 1220 and 1230.

Second rigid structures 1250 may be formed around the terminal pin holes 1220 and 1230, respectively. The second rigid structures 1250 are formed along the edge regions of the terminal pin holes 1220 and 1230, respectively, and may be bent in a direction opposite to the direction in which the first rigid structure 1210 is bent.

In addition, at least one third rigid structure 1240 may be formed in an inner region of the metal member 1200. The third rigid structure 1240 may include a protrusion 1240a protruding upward from the top surface of the metal member 1200, and a recess 1240b recessed upward from the bottom surface of the metal member 1200 at a position corresponding to that of the protrusion 1240a. For example, the third rigid structure 1240 may be formed in a rectangular column shape, but is not necessarily limited thereto. In addition, the side surface of the third rigid structure 1240 may be inclined in a diagonal shape.

When the number of the third rigid structures 1240 formed on the metal member 1200 is plural, the plurality of third rigid structures 1240 may have the same or similar shapes, respectively. In addition, the third rigid structures 1240 may be formed to cross each other at one or more points on the metal member 1200.

In addition, although not illustrated in the drawings, a plurality of through holes (not illustrated) may be formed in an area of the metal member 1200 to accommodate the sealing member 133. This is to increase the bonding force (adhesion force) between the metal member 1200 having a structural shape and the sealing member 133.

In the above specification, metal members each having several structural shapes are exemplified, but the present disclosure is not necessarily limited thereto. In addition, it will be apparent to those skilled in the art that it is possible to form metal members having various structural shapes according to the technical idea of the present disclosure.

In the foregoing, various embodiments of the present disclosure have been described in detail with reference to exemplary embodiments thereof, but the scope of the present disclosure is not limited thereto. Various changes and modifications made by a person ordinarily skilled in the art using the basic concept of the present disclosure defined in the appended claims also belong to the scope of the present disclosure.

## Claims

1. An energy storage device (100) comprising:
an electrode element (110) including an anode plate, a separator, and a cathode plate;
a housing (120) configured to accommodate the electrode element;
a terminal plate (130) configured to cover an opened top surface of the housing; and
electrode terminals (140) protruding to an outside of the terminal plate and including an anode terminal, a cathode terminal, and two terminal pins,
**characterized in that** the terminal plate (130) consists of:
a metal member (131); and
a sealing member (133) that surrounds a top surface and a bottom surface of the metal member, and an outermost side surface between the top surface and the bottom surface,
wherein the sealing member (133) comprises an outer upper horizontal portion, an outer lower horizontal portion, and an outer vertical portion disposed between the housing and the metal member, and
wherein the metal member (131) has a plurality of through holes (830) formed in a region thereof so as to accommodate the sealing member, the plurality of through holes being filled with the sealing member.

2. The energy storage device of claim 1, wherein the sealing member (133) is made of an electrically insulative rubber material.

3. The energy storage device of claim 1 or 2, wherein the sealing member (133) comprises an inner upper horizontal portion, an inner lower horizontal portion, and an inner vertical portion disposed between the terminal pin and the metal member.

4. The energy storage device according to any one of the preceding claims, wherein the sealing member (133) has a first diameter L1 and a second diameter L2, and the second diameter L2 is different from the first diameter L1.

5. The energy storage device according to any one of the preceding claims, wherein the sealing member (133) has a first diameter L1 and a second diameter L2, and the second diameter L2 is equal to the first diameter L1.

6. The energy storage device according to any one of the preceding claims, wherein the metal member (131) has a diameter d1 different from a diameter d2 of a beading portion formed on an upper portion of the housing.

7. The energy storage device according to any one of the preceding claims, wherein the metal member (131) comprises a first rigid structure formed by bending upward or downward in an edge region of the metal member.

8. The energy storage device of claim 7, wherein the metal member (131) further comprises a second rigid structure comprising a first protrusion formed on the top surface of the metal member and a first depression formed on the bottom surface of the metal member at a position corresponding to a position of the first protrusion.

9. The energy storage device of claim 7, wherein the metal member (131) further comprises a second rigid structure disposed along edges of first and second terminal pin holes into which the anode and cathode terminals are inserted, respectively.

10. The energy storage device according to any one of the preceding claims, the sealing member (133) surrounds two terminal pin holes (550, 560) of the metal member.

## Patentansprüche

1. Energiespeichervorrichtung (100) umfassend:
ein Elektrodenelement (110) umfassend eine Anodenplatte, einen Separator, und eine Kathodenplatte;
ein Gehäuse (120), das dazu konfiguriert ist, das Elektrodenelement aufzunehmen;
eine Anschlussplatte (130), die dazu konfiguriert ist, eine geöffnete obere Oberfläche des Gehäuses abzudecken; und
Elektrodenanschlüsse (140), die zu einer Außenseite der Anschlussplatte vorstehen und einen Anodenanschluss, einen Kathodenanschluss, und zwei Anschlussstifte umfassen,
**dadurch gekennzeichnet, dass** die Anschlussplatte (130) besteht aus:
einem Metallelement (131); und
einem Abdichtungselement (133), das eine obere Oberfläche und eine untere Oberfläche des Metallelements, und eine äußerste Seitenoberfläche zwischen der oberen Oberfläche und der unteren Oberfläche umgibt,
wobei das Abdichtungselement (133) einen äußeren oberen horizontalen Abschnitt, einen äußeren unteren horizontalen Abschnitt, und einen äußeren vertikalen Abschnitt umfasst, der zwischen dem Gehäuse und dem Metallelement angeordnet ist, und
wobei das Metallelement (131) eine Vielzahl von Durchgangslöchern (830) aufweist, die in einen Bereich von diesem gebildet sind, um das Abdichtungselement aufzunehmen, wobei die Vielzahl von Durchgangslöchern mit dem Abdichtungselement gefüllt sind.

2. Energiespeichervorrichtung nach Anspruch 1, wobei das Abdichtungselement (133) aus einem elektrisch isolierenden Gummimaterial besteht.

3. Energiespeichervorrichtung nach Anspruch 1 oder 2, wobei das Abdichtungselement (133) einen inneren oberen horizontalen Abschnitt, einen inneren unteren horizontalen Abschnitt, und einen inneren vertikalen Abschnitt umfasst, der zwischen dem Anschlussstift und dem Metallelement angeordnet ist.

4. Energiespeichervorrichtung nach einem der vorhergehenden Ansprüche, wobei das Abdichtungselement (133) einen ersten Durchmesser L1 und einen zweiten Durchmesser L2 aufweist, und der zweite Durchmesser L2 unterschiedlich von dem ersten Durchmesser L1 ist.

5. Energiespeichervorrichtung nach einem der vorhergehenden Ansprüche, wobei das Abdichtungselement (133) einen ersten Durchmesser L1 und einen zweiten Durchmesser L2 aufweist, und der zweite Durchmesser L2 gleich dem ersten Durchmesser L1 ist.

6. Energiespeichervorrichtung nach einem der vorhergehenden Ansprüche, wobei das Metallelement (131) einen Durchmesser d1 aufweist, der unterschiedlich von einem Durchmesser d2 eines Sickenabschnitts ist, der an einem oberen Abschnitt des Gehäuses gebildet ist.

7. Energiespeichervorrichtung nach einem der vorhergehenden Ansprüche, wobei das Metallelement (131) eine erste starre Struktur umfasst, die durch Biegen nach oben oder nach unten in einem Kantenbereich des Metallelements gebildet ist.

8. Energiespeichervorrichtung nach Anspruch 7, wobei das Metallelement (131) ferner eine zweite starre Struktur umfasst, die einen ersten Vorsprung, der an der oberen Oberfläche des Metallelements gebildet ist, und eine erste Vertiefung umfasst, die an der unteren Oberfläche des Metallelements an einer Position gebildet ist, die einer Position des ersten Vorsprungs entspricht.

9. Energiespeichervorrichtung nach Anspruch 7, wobei das Metallelement (131) ferner eine zweite starre Struktur umfasst, die entlang von Kanten von ersten und zweiten Anschlussstiftlöchern angeordnet ist, in welche die Anoden- und Kathodenanschlüsse jeweils eingefügt sind.

10. Energiespeichervorrichtung nach einem der vorhergehenden Ansprüche, wobei das Abdichtungselement (133) zwei Anschlussstiftlöcher (550, 560) des Metallelements umgibt.

## Revendications

1. Dispositif de stockage d'énergie (100) comprenant:
un élément d'électrode (110) comprenant une plaque d'anode, un séparateur et une plaque de cathode;
un logement (120) configuré pour loger l'élément d'électrode;
une plaque de borne (130) configurée pour recouvrir une surface supérieure ouverte du logement; et
des bornes d'électrode (140) dépassant vers l'extérieur de la plaque de borne et comprenant une borne d'anode, une borne de cathode et deux broches terminales,
**caractérisé en ce que** la plaque de borne (130) est constituée:
d'un élément métallique (131); et
d'un élément d'étanchéité (133) qui entoure une surface supérieure et une surface inférieure de l'élément métallique, et une surface latérale la plus à l'extérieur entre la surface supérieure et la surface inférieure,
dans lequel l'élément d'étanchéité (133) comprend une portion horizontale supérieure externe, une portion horizontale inférieure externe et une portion verticale externe disposées entre le logement et l'élément métallique, et
dans lequel l'élément métallique (131) a une pluralité de trous passants (830) formée dans une région de celui-ci, de manière à loger l'élément d'étanchéité, la pluralité de trous passants étant remplie avec l'élément d'étanchéité.

2. Dispositif de stockage d'énergie selon la revendication 1, dans lequel l'élément d'étanchéité (133) est fait d'un matériau en caoutchouc électriquement isolant.

3. Dispositif de stockage d'énergie selon la revendication 1 ou 2, dans lequel l'élément d'étanchéité (133) comprend une portion horizontale supérieure interne, une portion horizontale inférieure interne et une portion verticale interne disposées entre la broche de borne et l'élément métallique.

4. Dispositif de stockage d'énergie selon l'une quelconque des revendications précédentes, dans lequel l'élément d'étanchéité (133) a un premier diamètre L1 et un deuxième diamètre L2 et le deuxième diamètre L2 est différent du premier diamètre L1.

5. Dispositif de stockage d'énergie selon l'une quelconque des revendications précédentes, dans lequel l'élément d'étanchéité (133) a un premier diamètre L1 et un deuxième diamètre L2 et le deuxième diamètre L2 est égal au premier diamètre L1.

6. Dispositif de stockage d'énergie selon l'une quelconque des revendications précédentes, dans lequel l'élément métallique (131) a un diamètre d1 différent d'un diamètre d2 d'une portion perlée formée sur une portion supérieure du logement.

7. Dispositif de stockage d'énergie selon l'une quelconque des revendications précédentes, dans lequel l'élément métallique (131) comprend une première structure rigide formée par pliage vers le haut ou vers le bas dans une région de bord de l'élément métallique.

8. Dispositif de stockage d'énergie selon la revendication 7, dans lequel l'élément métallique (131) comprend en outre une deuxième structure rigide comprenant une première saillie formée sur la surface supérieure de l'élément métallique et une première dépression formée sur la surface inférieure de l'élément métallique au niveau d'une position correspondante à une position de la première saillie.

9. Dispositif de stockage d'énergie selon la revendication 7, dans lequel l'élément métallique (131) comprend en outre une deuxième structure rigide disposée le long des bords des premier et deuxième trous de broche de borne dans lesquels les bornes d'anode et de cathode sont respectivement insérées.

10. Dispositif de stockage d'énergie selon l'une quelconque des revendications précédentes, dans lequel l'élément d'étanchéité (133) entoure deux trous de broche de borne (550, 560) de l'élément métallique.
